# FASCICULE DE BREVET EUROPEEN

(11) **EP 1 489 327 B1**
(45) Date de publication et mention de la délivrance du brevet: **23.11.2005**
(21) Numéro de dépôt: 04291507.4
(22) Date de dépôt: 16.06.2004
(51) Int. Cl.: F16D 23/14

(54) **Butée de débrayage et procédé de montage**
Ausrücksvorrichtung und Montageverfahren
Clutch release device and method of assembly

(30) Priorité: 18.06.2003 FR 0307355
(43) Date de publication de la demande: 22.12.2004
(73) Titulaire: Aktiebolaget SKF, 415 50 Göteborg (SE)
(72) Inventeur: Arnault, Benoît, 37540 Saint Cyr sur Loire (FR)
(74) Mandataire: Dossmann, Gérard

(56) Documents cités:
- WO-A-02/052163
- FR-A- 2 772 444
- US-A- 4 874 073

## Description

La présente invention concerne le domaine des butées de débrayage destinées à agir sur le diaphragme d'un embrayage, en particulier pour un véhicule automobile.

L'invention s'applique aux butées de débrayage comprenant un roulement dont une des bagues est tournante et l'autre bague est fixe.

Entre la bague tournante et la bague fixe sont disposées des billes régulièrement réparties dans le sens circonférentiel au moyen d'une cage, la bague tournante étant munie d'une surface d'attaque sensiblement radiale destinée à venir en contact avec l'extrémité des doigts composant le diaphragme de l'embrayage. Un élément de manoeuvre supporte le roulement et, sous l'action d'un organe de commande (mécanique, électrique ou hydraulique), vient déplacer axialement le roulement de butée contre le diaphragme de l'embrayage.

Le document WO 02/052163 décrit une butée pour embrayage de véhicule automobile équipée d'un piston mobile axialement et une bague accrochée sur le piston à l'aide de moyens élastiques de pincement à effet axial. Une face de la bague prend appui sur une face d'accrochage ménagée dans le piston. Les moyens de pincement prennent appui sur la face opposée de la bague et une autre face d'accrochage également ménagée dans le piston. Les moyens élastiques de pincement se présentent sous la forme d'une attache annulaire pourvue de pattes en saillie dans des perçages axiaux ménagés dans le piston qui débouchent dans des perçages radiaux. La forme du piston est donc relativement complexe, ce qui est nuisible en termes de coût. En outre, le piston, l'attache, la rondelle élastique associée et la bague doivent être montés simultanément ensemble, ce qui complique le procédé d'assemblage.

La présente invention propose de remédier à ces inconvénients.

La présente invention propose une butée de débrayage particulièrement robuste et fiable avec des éléments de forme relativement simple.

Le dispositif de butée de débrayage, selon un aspect de l'invention, est du type comprenant un élément de manoeuvre, un palier à roulement muni d'une bague non tournante et d'une bague tournante, et un moyen de solidarisation axiale de l'élément de manoeuvre et du palier à roulement. Ledit dispositif comprend une bague de fixation montée sur l'élément de manoeuvre. La bague de fixation comprend une pluralité de languettes élastiques radialement aptes à assurer la retenue axiale d'un élément élastique disposé axialement entre lesdites languettes élastiques et ladite bague non tournante pour exercer un appui axial sur la bague non tournante.

Un tel dispositif est capable d'agir sur un diaphragme de mécanisme d'embrayage.

Le montage de la butée est facile et pratique. L'élément élastique peut être monté après l'assemblage du roulement et de la bague de fixation en venant s'encliqueter par un mouvement axial. L'élément de manoeuvre présente une forme simple et est donc robuste.

Avantageusement, ladite bague de fixation est monobloc. La bague de fixation est donc robuste et économique.

Dans un mode de réalisation de l'invention, la bague de fixation comprend des languettes de fixation sur l'élément de manoeuvre. La bague de fixation peut être fixée sur l'élément de manoeuvre par un simple mouvement axial, les languettes de fixation présentant une certaine élasticité radiale. L'élément de manoeuvre peut comprendre au moins une surface de butée en contact avec les languettes de fixation. La surface de butée peut être radiale et en contact avec l'extrémité libre des languettes de fixation.

Dans un mode de réalisation de l'invention, la bague de fixation comprend une première portion axiale en contact avec l'élément de manoeuvre, une portion radiale, et une deuxième portion axiale supportant lesdites languettes élastiques. Les languettes de fixation peuvent être issues de la première portion axiale.

Dans un mode de réalisation de l'invention, la portion radiale est en contact avec la bague non tournante et avec l'élément de manoeuvre. La bague non tournante peut se déplacer radialement par rapport à la portion radiale. Il est donc intéressant que la bague non tournante en tôle soit en contact avec la portion radiale de la bague de fixation, également en tôle. On évite ainsi une usure prématurée.

Dans un mode de réalisation de l'invention, la deuxième portion axiale passe dans la zone de moindre diamètre de la bague non tournante. La bague non tournante peut présenter un diamètre minimum légèrement supérieur, par exemple de quelques dizièmes de millimètres ou quelques millimètres au diamètre extérieur de la deuxième portion axiale. La bague non tournante peut comprendre une branche radiale dirigée vers l'intérieur pour l'accrochage avec l'élément de manoeuvre.

Dans un mode de réalisation de l'invention, lesdites languettes élastiques sont issues de la deuxième portion axiale et dirigées obliquement vers l'extérieur et vers la portion radiale de la bague de fixation à partir de ladite deuxième portion axiale. Les languettes élastiques peuvent être formées par découpe de fenêtres dans la deuxième portion axiale et pliage vers l'extérieur, les languettes étant monobloc avec la deuxième portion axiale et supportées par une portion annulaire d'extrémité à l'opposé de la portion radiale. En variante, les languettes peuvent être formées par pliage de portions discontinues s'étendant au delà de la portion annulaire.

Dans un mode de réalisation de l'invention, ledit élément élastique comprend une rondelle élastique axialement, par exemple une rondelle Belleville.

Dans un mode de réalisation de l'invention, lesdites languettes élastiques sont en contact avec une portion de petit diamètre dudit élément élastique. La portion de grand diamètre de l'élément élastique est en contact avec la bague non tournante, du côté opposé à l'élément de manoeuvre. La bague non tournante est donc maintenue élastiquement entre la portion radiale de la bague de fixation et l'élément élastique. Lesdites languettes élastiques forment un arrêt axial robuste pour la zone de petit diamètre de l'élément élastique.

Lesdites languettes élastiques présentent une extrémité libre de diamètre supérieur à l'alésage de l'élément élastique à l'état libre. L'élément élastique présente un alésage supérieur au diamètre extérieur de la deuxième portion axiale.

Avantageusement, la bague non tournante comprend une portion radiale dirigée vers l'intérieur, disposée axialement entre une portion radiale de la bague de fixation et ledit élément élastique.

Dans un mode de réalisation de l'invention, la bague non tournante est en contact direct avec ledit élément élastique.

Dans un autre mode de réalisation de l'invention, il est prévu un élément d'étanchéité solidaire de la bague non tournante et en contact avec ledit élément élastique. L'élément d'étanchéité peut former un passage étroit avec la bague tournante. L'élément d'étanchéité peut se présenter sous la forme d'une coupelle annulaire en tôle.

Dans un autre mode de réalisation de l'invention, l'élément de manoeuvre est un poussoir de butée hydraulique.

L'invention propose également un système de commande d'embrayage équipé d'un dispositif de butée de débrayage du type comprenant un élément de manoeuvre, un palier à roulement muni d'une bague non tournante et d'une bague tournante en contact avec un diaphragme, et un moyen de solidarisation axiale de l'élément de manoeuvre et du palier à roulement. Le dispositif comprend une bague de fixation montée sur l'élément de manoeuvre. La bague de fixation comprend une pluralité de languettes élastiques radialement aptes à assurer la retenue axiale d'un élément élastique disposé entre lesdites languettes élastiques et ladite bague non tournante pour exercer un appui axial sur la bague non tournante.

L'invention propose également un procédé de montage d'une butée de débrayage, dans lequel on amène un élément élastique en contact avec une bague non tournante de palier à roulement; et du côté axialement opposé de la bague non tournante, on amène une bague de fixation comprenant une pluralité de languettes élastiques radialement de façon que lesdites languettes élastiques s'effacent radialement en passant dans l'élément élastique puis reprennent leur forme initiale en empêchant une séparation de la bague non tournante et de l'élément élastique et en permettant à l'élément élastique disposé entre lesdites languettes élastiques et ladite bague non tournante d'exercer un appui axial sur la bague non tournante.

Dans un mode de réalisation de l'invention, on monte la bague de fixation sur un élément de manoeuvre.

Dans un mode de réalisation de l'invention, on appuie axialement sur l'élément élastique pour favoriser l'encliquetage des languettes élastiques.

La bague de fixation est économique à fabriquer, facile à mettre en place par un simple mouvement axial et peu encombrante.

La présente invention sera mieux comprise à l'étude de la description détaillée de quelques modes de réalisation pris à titre d'exemples nullement limitatifs et illustrés par les dessins annexés, sur lesquels :
- la figure 1 est une demi-vue en coupe axiale d'une butée de débrayage selon un aspect de l'invention ;
- la figure 2 est une vue en coupe axiale d'une butée de débrayage et de l'élément de manoeuvre qui la supporte suivant un aspect de l'invention;

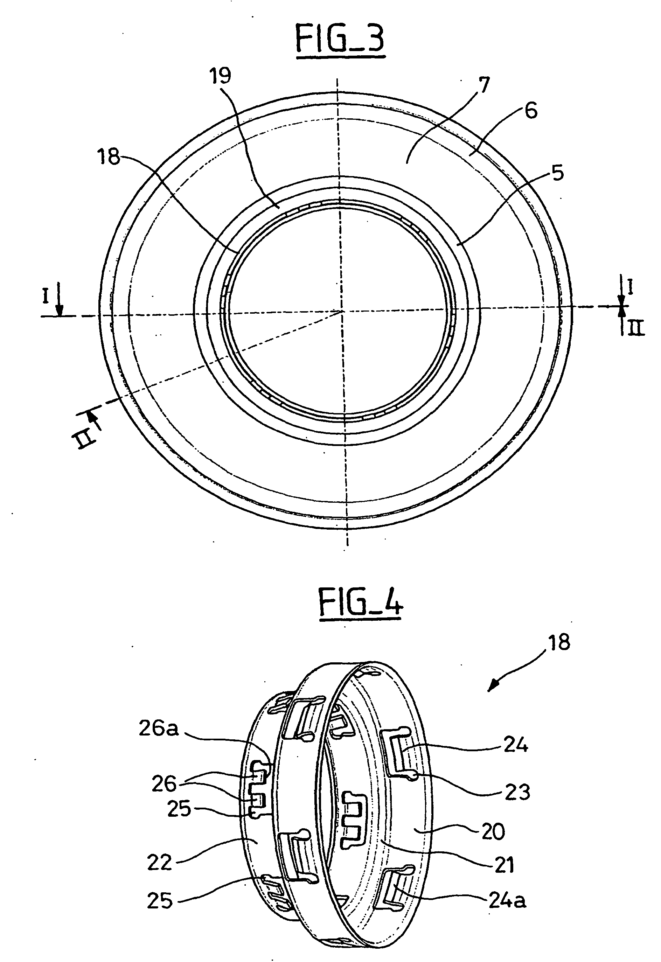

- la figure 3 est une vue de face en élévation de la butée illustré sur la figure 2 ;
- la figure 4 est une vue en perspective de la bague de fixation de la butée de débrayage de la figure 1 ; et
- la figure 5 est une demi-vue en coupe axiale d'une butée de débrayage selon un autre mode de réalisation de l'invention.

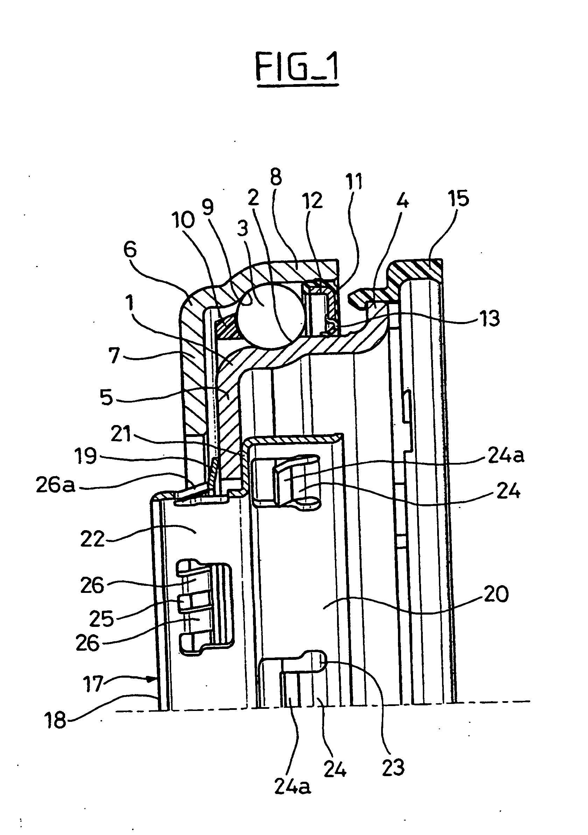

Comme on peut le voir sur la figure 1, la butée de débrayage comprend une bague non tournante de roulement 1 à paroi mince réalisée par emboutissage d'une tôle ou d'un tube présentant un chemin de roulement circulaire en forme de portion de tore 2 pour une rangée d'éléments roulants, ici des billes 3, ledit chemin présentant une section axiale méridienne à profil en arc de cercle concave. La bague intérieure 1 comporte une portion radiale 4 dirigée vers l'extérieur et une portion radiale 5 dirigée vers l'intérieur, lesdites portions radiales 4 et 5 étant disposées d'un côté et de l'autre des éléments roulants 3. La bague non tournante 1 est une bague intérieure. En variante, la bague non tournante 1 peut être une bague extérieure.

Le palier à roulement se complète par une bague extérieure 6 présentant une portion radiale 7 en saillie vers l'intérieur de l'ensemble et une portion cylindrique 8 du côté de la portion radiale 4. La portion radiale 7 est capable de venir en contact avec la surface d'un diaphragme ou d'un élément équivalent, non représenté, permettant l'actionnement d'un embrayage, notamment de véhicule automobile. La bague extérieure 6 comprend également une paroi mince qui peut être réalisée par emboutissage d'une tôle ou d'un tube. La bague extérieure 6 présente un chemin de roulement circulaire 9, en forme de portion de tore, pour la rangée d'éléments roulants 3, ledit chemin présentant en section axiale méridienne un profil en arc de cercle concave. Les éléments roulants 3 sont maintenus par une cage 10 entre le chemin de roulement 2 de la bague intérieure 1 et le chemin de roulement 9 de la bague extérieure 6. Le roulement à billes se complète par un organe d'étanchéité 11 monté de manière étanche dans la portion cylindrique 8 de la bague extérieure 5 et comprenant une armature 12 et une partie souple 13 venant frotter sur une portée cylindrique de la bague non tournante 1.

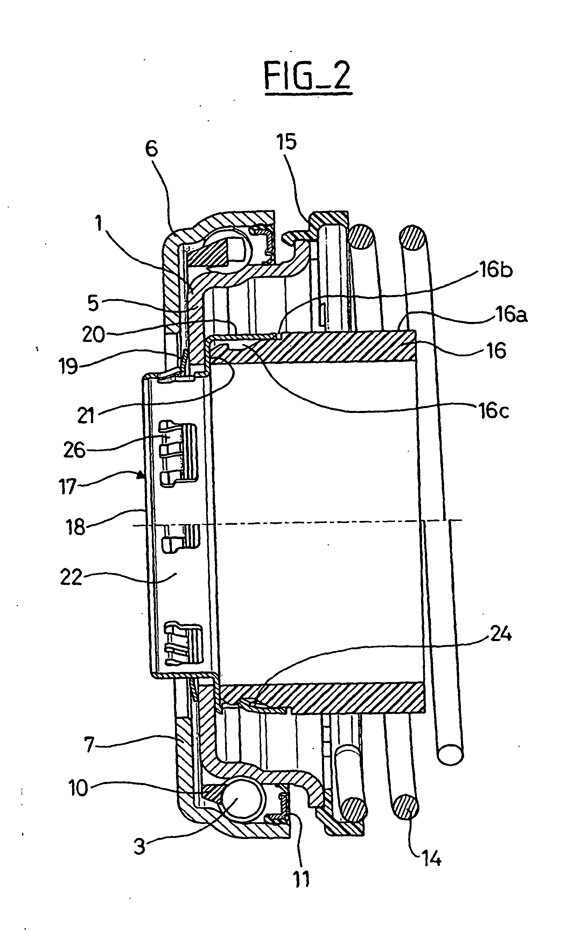

Il est également prévu un ressort 14 de précontrainte de la butée visible sur la figure 2 et un élément d'accrochage 15. Le ressort 14 est de type hélicoïdal, de diamètre de même ordre de grandeur que le diamètre extérieur de la portion radiale 4 de la bague non tournante 1. L'élément d'accrochage 15 vient s'encliqueter sur l'extrémité libre de ladite portion radiale 4 et assure l'interface entre le ressort 14 et la bague non tournante 1. Dans le cas d'une butée de type hydraulique, le ressort 14 assure le maintien de la butée en appui contre le diaphragme avec un certain effort axial de précontrainte en dehors des périodes de manoeuvre de l'embrayage, c'est-à-dire lorsqu'il n'y a pas de pression hydraulique dans le dispositif destiné à actionner la butée.

La butée de débrayage se complète par un élément de manoeuvre 16, visible sur la figure 2. L'élément de manoeuvre 16 peut être une pièce distincte de l'organe de commande actionnant le dispositif ou faire partie intégrante de celui-ci. L'élément de manoeuvre 16 peut être constitué, par exemple, par le piston hydraulique d'un dispositif de butée de débrayage à commande hydraulique.

La butée de débrayage comprend également un moyen de solidarisation axiale 17 entre l'élément de manoeuvre 16 et le roulement de butée, plus précisément la bague non tournante 1. Le moyen de solidarisation axiale 17 est du type permettant un certain déplacement radial de la bague non tournante 1 du roulement de butée par rapport à l'élément de manoeuvre 16.

Plus précisément, l'élément de manoeuvre 16 se présente sous la forme d'une portion de tube réalisée en matériau synthétique pourvu d'un alésage cylindrique et d'une surface extérieure 16a également cylindrique et entourée à une certaine distance par le ressort 14. Toutefois, l'extrémité de l'élément de manoeuvre 16, du côté du moyen de solidarisation axiale 17, présente un diamètre extérieur légèrement réduit avec un épaulement 16b et une rainure annulaire 16c. La rainure annulaire 16c ouverte vers l'extérieur peut présenter un rebord sensiblement radial à l'opposé de l'épaulement 16b.

Le moyen de solidarisation axiale 17 comprend une bague de fixation 18 et une rondelle axialement élastique 19, distinctes l'une de l'autre. La rondelle élastique 19 peut être du type rondelle Belleville et présente un bord extérieur en contact avec la portion radiale 5 de la bague non tournante 1 du côté opposé à l'élément de manoeuvre 16 et un bord intérieur décalé axialement par rapport à ladite portion radiale 5.

La bague de fixation 18 se présente sous la forme d'une pièce monobloc réalisée en tôle, de forme générale annulaire. La bague de fixation 18 comprend une première portion axiale 20, une portion radiale 21 et une deuxième portion axiale 22 reliée à la première portion axiale 20 par ladite portion radiale 21. La portion radiale 21 est en contact avec la portion radiale 5 de la bague intérieure 1 du côté opposé à la rondelle élastique 19. La première portion axiale 20 s'étend à l'opposé de ladite portion radiale 5 axialement au niveau des billes 3 et de l'organe d'étanchéité 11, en restant en retrait par rapport à la portion radiale 4. La première portion axiale 20 présente un diamètre supérieur au diamètre minimum de la bague non tournante 1 à l'extrémité libre de la portion radiale 5.

Dans la première portion axiale 20, sont formées par découpe une pluralité de fenêtres 23 en forme de U, laissant subsister des languettes 24 présentant une certaine élasticité radiale, se rattachant à la première portion axiale 20 du côté de son extrémité libre, à l'opposé de la portion radiale 21. Les languettes 24 comprennent une extrémité libre 24a pliée en oblique vers l'intérieur.

Comme on le voit plus particulièrement sur la figure 2, la première portion axiale 20 est montée autour de l'extrémité libre de diamètre réduit de l'élément de manoeuvre 16. La portion radiale 21 vient en contact avec la surface frontale radiale d'extrémité de l'élément de manoeuvre 16. La portion radiale 21 transmet ainsi les efforts axiaux entre l'élément de manoeuvre 16 et la bague non tournante 1 du palier à roulement. L'extrémité libre de la première portion axiale 20 est située à faible distance de l'épaulement 16b. Les languettes 24 font saillie dans la rainure annulaire 16c avec leurs extrémités libres 24a venant en contact de butée contre la surface radiale de ladite rainure annulaire 16c du côté opposé à l'épaulement 16b. La bague de fixation 18 et l'élément de manoeuvre 16 peuvent présenter des diamètres extérieurs sensiblement identiques. La bague de fixation 18 et l'élément de manoeuvre 16 peuvent se fixer l'un sur l'autre par un simple mouvement axial. Les extrémités libres 24a des languettes 24 sont capables de s'effacer vers l'extérieur avant de rentrer dans la rainure annulaire 16c en reprenant au moins en partie leur position d'origine à l'état libre, garantissant ainsi la solidarisation de la bague de fixation 18 et de l'élément de manoeuvre 16, de façon sûre.

La deuxième portion axiale 22 présente un diamètre extérieur inférieur au diamètre minimal de la bague non tournante 1 pris à l'extrémité libre de la portion radiale 5. La différence de ces diamètres autorise un certain déplacement radial du roulement de butée par rapport à l'élément de manoeuvre 16 et permet ainsi l'auto-alignement du roulement de butée par rapport au diaphragme de l'embrayage.

La deuxième portion axiale 22 fait saillie axialement au-delà de la portion radiale 5 de la bague non tournante 1. Des découpes 25 sont formées dans la deuxième portion axiale 22 et présentent une forme générale de W, laissant subsister deux languettes 26 par découpe 25. Les languettes 26 se rattachent à la deuxième portion axiale 22 du côté opposé à la portion radiale 21 et présentent une extrémité libre en saillie radialement vers l'extérieur.

En d'autres termes, les découpes 25 laissent subsister de la deuxième portion axiale 22, deux portions annulaires continues, l'une voisine de la portion radiale 21 et l'autre distante, et une portion centrale dans laquelle sont formées les découpes 25. Les languettes 26 ont leurs extrémités libres en contact avec le bord intérieur de la rondelle élastique 19.

Le montage peut s'effectuer de la façon suivante. On amène la bague de fixation 18 à l'intérieur de la bague non tournante 1, axialement du côté ouvert, c'est-à-dire du côté où se trouve la portion radiale 4 dirigée vers l'extérieur. On fait passer la deuxième portion axiale 22 de la bague de fixation 18 dans l'extrémité libre de la portion radiale 5 de la bague non tournante 1. Selon leur inclinaison vers l'extérieur, les languettes 26 pourront ou non être en contact et donc s'effacer au passage de la portion radiale 5. Puis, on amène la rondelle élastique 19 du côté de l'extrémité libre de la deuxième portion axiale 22, on force axialement ladite rondelle élastique 19 contre la portion radiale 5 de la bague non tournante 1, de façon que les languettes 26 s'effacent radialement au passage de l'alésage de la rondelle élastique 19 puis reprennent leur position initiale et s'encliquètent du côté de la rondelle élastique 19 opposée à la portion radiale 5. On relâche ensuite l'effort exercé. L'extrémité 26a des languettes 26 forme alors une butée de retenue axiale pour la rondelle élastique 19, interdisant ainsi tout mouvement axial de ladite rondelle dans une direction opposée à l'élément de manoeuvre 16. La rondelle élastique 19 est ainsi disposée et précontrainte axialement entre les languettes élastiques 26 et la portion radiale 5 de la bague non tournante 1.

La rondelle axialement élastique 19 présentant à l'état libre un encombrement axial légèrement supérieur à l'espace axial subsistant entre la portion radiale 5 et l'extrémité libre des languettes 26 lorsque la portion radiale 21 de la bague de fixation 18 est en contact avec la portion radiale 5, il peut être nécessaire de prévoir un outil annulaire d'appui de la rondelle élastique 19 contre la portion radiale 5. Cet outil, non représenté, sera prévu avec un alésage suffisamment grand pour permettre aux languettes 26 de reprendre leur forme initiale. Après retrait d'un tel outil, la rondelle élastique 19, par élasticité, tend à reprendre sa forme à l'état libre. Le bord intérieur de ladite rondelle élastique 19 vient donc en contact avec l'extrémité libre des languettes 26. Le bord intérieur de la rondelle élastique 19 prend donc appui par sa zone de petit diamètre sur l'extrémité libre 26a des languettes élastiques 26.

On comprend que ce type de montage est particulièrement simple, avec un premier mouvement axial pour disposer la bague de fixation 18 dans la bague non tournante 1 et un second mouvement axial pour mettre en position la rondelle élastique 19. On s'affranchit de toute étape de pliage lors de l'assemblage de ces éléments.

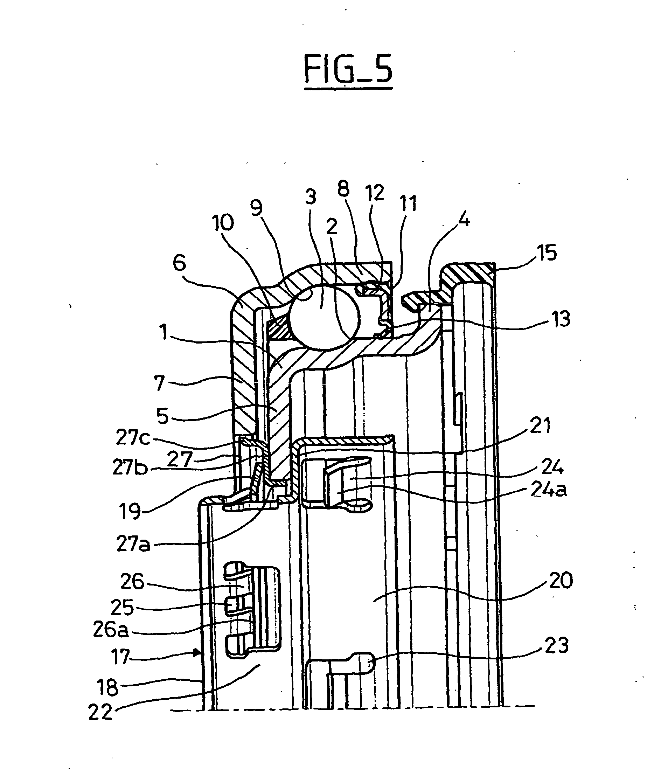

Dans le mode de réalisation illustré sur la figure 5, il est prévu en outre un organe d'étanchéité 27, de forme annulaire, comprenant une première portion axiale 27a disposée en contact avec l'alésage de la portion radiale 5 de la bague non tournante 1. La première portion axiale 27a peut être emmanchée ou simplement centrée dans ledit alésage. L'organe d'étanchéité 27 se complète par une portion radiale 27b en contact, d'un côté, avec la portion radiale 5 et, du côté opposé, avec le bord extérieur de la rondelle élastique 19, et une deuxième portion axiale 27c dirigée à l'opposé de la portion radiale 5 et formant un passage étroit avec l'extrémité libre de la portion radiale 7 de la bague tournante 6 pour améliorer l'étanchéité du roulement. En d'autres termes, la rondelle élastique 19 est en contact avec un élément monté sur la bague non tournante 1, cet élément assurant l'étanchéité entre les bagues tournante et non tournante.

Grâce à l'invention, on réalise un système de fixation du roulement de butée et d'auto-centrage très compact et facile à assembler, même de façon automatique. Il suffit en effet de réaliser le sous-ensemble roulement et bague de fixation en positionnant le roulement sur la bague de fixation, puis en encliquetant la rondelle élastique sur la bague de fixation par une simple poussée axiale. Le sous-ensemble ainsi formé peut également être encliqueté par une simple poussée axiale sur le poussoir ou élément de manoeuvre qui comporte une rainure annulaire pour l'accrochage des languettes élastiques de la première portion axiale de la bague de fixation. Alternativement, l'élément de manoeuvre et la bague de fixation peuvent être assemblés au préalable.

## Revendications

1. Dispositif de butée de débrayage, du type comprenant un élément de manoeuvre (16), un palier à roulement muni d'une bague non tournante (1) et d'une bague tournante (6), et un moyen de solidarisation axiale (17) de l'élément de manoeuvre (16) et du palier à roulement, **caractérisé par le fait qu'**il comprend une bague de fixation (18) montée sur l'élément de manoeuvre (16) et pourvue d'une pluralité de languettes (26) élastiques radialement aptes à assurer la retenue axiale d'un élément élastique (19) disposé entre lesdites languettes élastiques (26) et ladite bague non tournante (1) pour exercer un appui axial sur la bague non tournante.

2. Dispositif selon la revendication 1, **caractérisé par le fait que** ladite bague de fixation (18) est monobloc.

3. Dispositif selon la revendication 1 ou 2, **caractérisé par le fait que** la bague de fixation (18) comprend des languettes (24) de fixation sur l'élément de manoeuvre (16).

4. Dispositif selon l'une quelconque des revendications précédentes, **caractérisé par le fait que** la bague de fixation (18) comprend une première portion axiale (20) en contact avec l'élément de manoeuvre (16), une portion radiale (21), et une deuxième portion axiale (22) supportant lesdites languettes élastiques (26).

5. Dispositif selon la revendication précédente, **caractérisé par le fait que** la portion radiale (21) est en contact avec la bague non tournante (1).

6. Dispositif selon la revendication 4 ou 5, **caractérisé par le fait que** la deuxième portion axiale (22) passe dans la zone de moindre diamètre de la bague non tournante.

7. Dispositif selon l'une quelconque des revendications 4 à 6, **caractérisé par le fait que** lesdites languettes élastiques (26) sont issues de la deuxième portion axiale (22) et dirigées obliquement vers l'extérieur et vers la portion radiale (21) de la bague de fixation (18) à partir de ladite deuxième portion axiale.

8. Dispositif selon l'une quelconque des revendications précédentes, **caractérisé par le fait que** ledit élément élastique (19) comprend une rondelle élastique axialement.

9. Dispositif selon l'une quelconque des revendications précédentes, **caractérisé par le fait que** lesdites languettes élastiques (26) sont en contact avec une zone de petit diamètre dudit élément élastique (19).

10. Dispositif selon l'une quelconque des revendications précédentes, **caractérisé par le fait que** la bague non tournante comprend une portion radiale (5) dirigée vers l'intérieur, disposée axialement entre une portion radiale de la bague de fixation et ledit élément élastique.

11. Dispositif selon l'une quelconque des revendications précédentes, **caractérisé par le fait que** la bague non tournante (1) est en contact direct avec ledit élément élastique (19).

12. Dispositif selon l'une quelconque des revendications précédentes, **caractérisé par le fait qu'**il comprend un élément d'étanchéité (27) solidaire de la bague non tournante (1) et en contact avec ledit élément élastique (19).

13. Dispositif selon l'une quelconque des revendications précédentes, **caractérisé par le fait que** l'élément de manoeuvre (16) est un poussoir hydraulique.

14. Système de commande d'embrayage comprenant un dispositif selon l'une quelconque des revendications précédentes.

15. Procédé de montage d'une butée de débrayage comprenant un palier à roulement muni d'une bague non tournante et d'une bague tournante, dans lequel on amène un élément élastique en contact avec ladite bague non tournante, du côté axialement opposé de la bague non tournante, on amène une bague de fixation comprenant une pluralité de languettes élastiques radialement de façon que lesdites languettes élastiques s'effacent radialement en passant dans l'élément élastique puis reprennent leur forme initiale en empêchant une séparation de la bague non tournante et de l'élément élastique et en permettant à l'élément élastique disposé entre lesdites languettes élastiques et ladite bague non tournante d'exercer un appui axial sur la bague non tournante.

16. Procédé selon la revendication 15, dans lequel on monte la bague de fixation sur un élément de manoeuvre.

17. Procédé selon la revendication 15 ou 16, dans lequel on appuie axialement sur l'élément élastique pour favoriser l'encliquetage des languettes élastiques.

## Patentansprüche

1. Kupplungsausrücklagervorrichtung der Art, die ein Betätigungsmittel (16), ein mit einem sich nicht drehenden Ring (1) und einem sich drehenden Ring (6) versehenes Wälzlager und ein Mittel zum Festsetzen in Achsenrichtung (17) des Betätigungsmittels (16) und des Wälzlagers umfasst, **dadurch gekennzeichnet, dass** es einen Befestigungsring (18) aufweist, der auf dem Betätigungsmittel (16) montiert und mit mehreren radial elastischen Zungen (26) versehen ist, die in der Lage sind, die axiale Rückhaltung eines elastischen Teils (19) sicherzustellen, das zwischen den genannten elastischen Zungen (26) und dem sich nicht drehenden Ring (1) angeordnet ist, um einen axialen Druck auf den sich nicht drehenden Ring auszuüben.

2. Vorrichtung nach Patentanspruch 1, **dadurch gekennzeichnet, dass** der genannte Befestigungsring (18) einstückig ist.

3. Vorrichtung nach Patentanspruch 1 oder 2, **dadurch gekennzeichnet, dass** der genannte Befestigungsring (18) Zungen (24) zur Befestigung am Betätigungsmittel (16) aufweist.

4. Vorrichtung nach irgendeinem der vorangehenden Patentansprüche, **dadurch gekennzeichnet, dass** der genannte Befestigungsring (18) einen ersten axialen Bereich (20) in Kontakt mit dem Betätigungsmittel (16) aufweist, einen radialen Bereich (21) und einen zweiten axialen Bereich (22), der die genannten elastischen Zungen (26) trägt.

5. Vorrichtung nach dem vorangehenden Patentanspruch, **dadurch gekennzeichnet, dass** der radiale Bereich (21) mit dem sich nicht drehenden Ring (1) in Berührung steht.

6. Vorrichtung nach Patentanspruch 4 oder 5, **dadurch gekennzeichnet, dass** der zweite axiale Bereich (22) in den Bereich geringeren Durchmessers des sich nicht drehenden Ringes eindringt.

7. Vorrichtung nach irgendeinem der Patentansprüche 4 bis 6, **dadurch gekennzeichnet, dass** die genannten elastischen Zungen (26) aus dem zweiten axialen Bereich (22) ragen und schräg nach außen und ausgehend vom genannten zweiten axialen Bereich auf den radialen Bereich (21) des Befestigungsringes (18) gerichtet sind.

8. Vorrichtung nach irgendeinem der vorangehenden Patentansprüche, **dadurch gekennzeichnet, dass** das genannte elastische Teil (19) einen in Achsenrichtung elastischen Ring umfasst.

9. Vorrichtung nach irgendeinem der vorangehenden Patentansprüche, **dadurch gekennzeichnet, dass** die genannten elastischen Zungen (26) mit einem Abschnitt geringen Durchmessers des genannten elastischen Teils (19) in Berührung stehen.

10. Vorrichtung nach irgendeinem der vorangehenden Patentansprüche, **dadurch gekennzeichnet, dass** der sich nicht drehende Ring einen nach innen gerichteten radialen Bereich (5) aufweist, der axial zwischen einem radialen Bereich des Befestigungsringes und dem genannten elastischen Teil angeordnet ist.

11. Vorrichtung nach irgendeinem der vorangehenden Patentansprüche, **dadurch gekennzeichnet, dass** der sich nicht drehende Ring (1) direkt mit dem genannten elastischen Teil (19) in Berührung steht.

12. Vorrichtung nach irgendeinem der vorangehenden Patentansprüche, **dadurch gekennzeichnet, dass** sie ein Dichtungsteil (27) aufweist, das mit dem sich nicht drehenden Ring (1) fest verbunden ist und mit dem genannten elastischen Teil (19) in Berührung steht.

13. Vorrichtung nach irgendeinem der vorangehenden Patentansprüche, **dadurch gekennzeichnet, dass** das Betätigungsmittel (16) ein hydraulischer Stößel ist.

14. Kupplungsbetätigungssystem, das eine Vorrichtung nach irgendeinem der vorangehenden Patentansprüche enthält.

15. Montageverfahren für ein Kupplungsausrücklager, das ein mit einem sich nicht drehenden Ring und einem sich drehenden Ring versehenes Wälzlager umfasst, in dem ein elastisches Teil mit dem genannten sich nicht drehenden Ring in Berührung gebracht wird, auf der in Achsenrichtung entgegengesetzten Seite des sich nicht drehenden Ringes ein Befestigungsring, der mehrere radial elastische Zungen aufweist, derart angebracht wird, dass die genannten elastischen Zungen sich radial einziehen, wenn sie ins elastische Teil eindringen, und dann wieder ihre ursprüngliche Form annehmen, wobei sie eine Trennung des sich nicht drehenden Ringes vom elastischen Teil verhindern und dem elastischen Teil, das zwischen den genannten elastischen Zungen und dem genannten sich nicht drehenden Ring angeordnet ist, erlauben, auf den sich nicht drehenden Ring einen axialen Druck auszuüben.

16. Verfahren nach Patentanspruch 15, in dem der Befestigungsring auf ein Betätigungsmittel montiert wird.

17. Verfahren nach Patentanspruch 15 oder 16, in dem axial auf das elastische Teil gedrückt wird, um das Einrasten der elastischen Zungen zu erleichtern.

## Claims

1. Clutch release bearing device of the type comprising: an operating element (16); a rolling-contact bearing fitted with a non-rotating ring (1) and a rotating ring (6); and a means of axial connection (17) between the operating element (16) and the rolling-contact bearing; **characterized in that** it comprises a fixing ring (18) mounted on the operating element (16) and provided with a plurality of radially elastic tabs (26) for the axial retention of an elastic element (19) which is placed between the said elastic tabs (26) and the said non-rotating ring (1) in order to apply axial pressure on the non-rotating ring.

2. Device according to Claim 1, **characterized in that** the said fixing ring (18) is made in one piece.

3. Device according to Claim 1 or 2, **characterized in that** the fixing ring (18) comprises tabs (24) for fixing it to the operating element (16).

4. Device according to any one of the preceding claims, **characterized in that** the fixing ring (18) comprises a first axial portion (20) in contact with the operating element (16), a radial portion (21), and a second axial portion (22) supporting the said elastic tabs (26).

5. Device according to the preceding claim, **characterized in that** the radial portion (21) is in contact with the non-rotating ring (1).

6. Device according to Claim 4 or 5, **characterized in that** the second axial portion (22) passes through the area of least diameter of the non-rotating ring.

7. Device according to any one of Claims 4 to 6, **characterized in that** the said elastic tabs (26) extend from the second axial portion (22) and are directed obliquely outward from the said second axial portion towards the radial portion (21) of the fixing ring (18).

8. Device according to any one of the preceding claims, **characterized in that** the said elastic element (19) comprises an axially elastic washer.

9. Device according to any one of the preceding claims, **characterized in that** the said elastic tabs (26) are in contact with a small-diameter area of the said elastic element (19).

10. Device according to any one of the preceding claims, **characterized in that** the non-rotating ring comprises an inwardly directed radial portion (5) situated axially between a radial portion of the fixing ring and the said elastic element.

11. Device according to any one of the preceding claims, **characterized in that** the non-rotating ring (1) is in direct contact with the said elastic element (19).

12. Device according to any one of the preceding claims, **characterized in that** it comprises a sealing element (27) attached to the non-rotating ring (1) and in contact with the said elastic element (19).

13. Device according to any one of the preceding claims, **characterized in that** the operating element (16) is a hydraulic push member.

14. Clutch control system comprising a device according to any one of the preceding claims.

15. Method for assembling a clutch release bearing comprising a rolling-contact bearing fitted with a non-rotating ring and a rotating ring, in which an elastic element is brought into contact with the said non-rotating ring, and a fixing ring comprising a plurality of radially elastic tabs is advanced from the axially opposite side of the non-rotating ring in such a way that the said elastic tabs retract radially as they pass through the elastic element, after which they resume their initial shape, preventing separation of the non-rotating ring and the elastic element and allowing the elastic element placed between the said elastic tabs and the said non-rotating ring to apply axial pressure to the non-rotating ring.

16. Method according to Claim 15, in which the fixing ring is fitted onto an operating element.

17. Method according to Claim 15 or 16, in which axial pressure is applied to the elastic element to help the elastic tabs click into place.
